**Europäisches Patentamt**

**European Patent Office**

**Office européen des brevets**

(19)

(11) Veröffentlichungsnummer : **0 409 034 B1**

(12)

# EUROPÄISCHE PATENTSCHRIFT

(45) Veröffentlichungstag der Patentschrift :
**23.03.94 Patentblatt 94/12**

(51) Int. Cl.⁵ : **B01D 53/06,** B01D 53/12,
B01D 53/02

(21) Anmeldenummer : **90113067.4**

(22) Anmeldetag : **09.07.90**

(54) **Verfahren zur Reinigung der Abluft von Spänetrocknern sowie Vorrichtung dafür.**

(30) Priorität : **20.07.89 DE 3924143**

(43) Veröffentlichungstag der Anmeldung :
**23.01.91 Patentblatt 91/04**

(45) Bekanntmachung des Hinweises auf die
Patenterteilung :
**23.03.94 Patentblatt 94/12**

(84) Benannte Vertragsstaaten :
**AT CH DE FR GB IT LI NL SE**

(56) Entgegenhaltungen :
**EP-A- 0 290 931**
**US-A- 4 080 174**
**US-A- 4 759 777**

(73) Patentinhaber : **Intensiv-Filter GmbH & Co KG**
**Postfach 11 03 06**
**D-42531 Velbert-Langenberg (DE)**

(72) Erfinder : **Nobis, Uwe, Dipl.-Ing.**
**Hünefeldstrasse 53**
**D-5600 Wuppertal 2 (DE)**

(74) Vertreter : **Meldau, Gustav, Dipl.-Ing. et al**
**Patentanwälte Dipl.-Ing. Gustav Meldau**
**Dipl.-Phys. Dr. Hans-Jochen Strauss, Postfach**
**24 52**
**D-33254 Gütersloh (DE)**

EP 0 409 034 B1

## Beschreibung

Die Erfindung betrifft ein Verfahren zur Abscheidung klebender oder verharzender, kondensierbarer organischer Dämpfe oder Gase aus der Abluft von Spänetrocknern, aus der Späne und Grobstaub mittels eines Massenkraftabscheiders und Feinstaub mittels eines filternden Abscheiders entfernt werden; sie betrifft darüber hinaus eine Vorrichtung zur Durchführung des Verfahrens.

Insbesondere zur Herstellung von Spanplatten werden industriell Holzspäne aus den verschiedensten Holzarten als Grundmaterial hergestellt. Dabei ist der richtig gesteuerte Wasserhaushalt des Spankuchens Voraussetzung für die Qualität der herzustellenden Spanplatte. Um dies zu erreichen, ist es notwendig, die mit unterschiedlichsten Anfangsfeuchte kommenden Späne auf eine möglichst einheitliche Endfeuchte von insbesonders unter 5% zu trocknen. Die Trockner dafür werden in aller Regel direkt beheizt, wobei die Wärmeübertragung auf die zu trocknenden Holzspäne durch direkte Berührung mit den heißen Rauchgasen erfolgt. Dabei befinden sich die Späne, um eine gute Durchmischung und eine allseitige Trocknung zu erreichen, in Bewegung, wobei die Bewegungsarten von den einzelnen Trocknersystemen abhängen. Das abgehende Rauchgas hat bei üblichen Trocknern eine Austrittstemperatur von um 130 °C und es enthält schwebefähiges Feingut, das mit dem Rauchgas ausgetragen wird.

Dieses Feingut wird von einem Anteil Grobstaub und feinen Spänen, soweit deren Sinkgeschwindigkeit (Stokes'sche Geschwindigkeit) von der abströmenden Abluft überwunden werden kann, sowie einem Anteil Feinstaub gebildet, wobei bei der Spanplattenproduktion zumindest der Grobstaub einschließlich der feinen Späne wieder in den Prozess zurückgeführt wird. Dazu wird die Abluft in einem Massenkraftabscheider, im allgemeinen in einem Zyklon, vorgereinigt und die dort abgeschiedenen Grobstaubanteile werden dem Herstellungsprozess für die Spanplatten unmittelbar wieder zugeführt. Der Feinanteil wird, um den Anforderungen an die Emissionsgrenzwerte nachkommen zu können, in filternden Abscheidern, die von Zeit zu Zeit abgereinigt werden müssen, abgetrennt. Der bei der Abreinigung anfallende Feinstaub wird in Bunkern gesammelt und geht im Regelfall in eine Heizanlage, um mit seiner Verbrennungswärme die Wärmebilanz zu verbessern und die Wirtschaftlichkeit der Herstellung durch Senkung des Heizmittelverbrauchs günstig zu beeinflussen.

Bei der Späneherstellung werden die unterschiedlichsten Hölzer verarbeitet, die unter Einfluß der (relativ) hohen Temperatur im Trockner organische Dämpfe an die Abluft abgeben. Diese organischen Dämpfe enthalten komplexe Kohlenwasserstoff-Verbindungen wie Harzsäuren, Terpene, Teer-Derivate o.dgl. Dabei ist Teer (und ggf. auch anfallender Ruß) ein typisches Pyrolyseprodukt, das eine unvollständige Verbrennung von Kohlenwasserstoffen anzeigt. Dabei kann nicht eindeutig unterschieden werden, ob es sich hierbei um Verbrennungsprodukte durch Übertrokknung der Holzsubstanz oder um unvollständige Verbrennung z.B. von Heizöl handelt. Allerdings ist der Teeranteil (und auch ein anfallender Rußanteil) durch eine gute Brennerregelung vermeidbar, so daß Teer und evtl. Ruß für die Abgasreinigung im Regelfall bedeutungslos sind. Anders verhält es sich jedoch mit dem Anteil der Terpene, die etwa 70% bis 90% der Gesamtmasse der emitierten organischen Stoffe ausmachen. Diese Stoffe werden weder in einem als Massenkraftabscheider einzustufenden Zyklon noch in einem als filternden Abscheider einstufenden Taschen- oder Schlauchfilter abgeschieden, vielmehr gelangen sie mit der Abluft in die freie Atmosphäre, wo sie sich einerseits durch ihren zum Teil äußerst intensiven Geruch bemerkbar machen, und wo sie andererseits zu einem Nebel kondensiert in der Nachbarschaft unerwünschte Belästigungen auslösen. Zur Verringerung von Geruchsimmissionen durch Verringerung der Emission sind schon Wäscher (US-A- 4 759 777) oder Nachverbrennungseinrichtung (USA-4 080 174) bekannt geworden, die jedoch aufgrund wasser- oder energiewirtschaftlicher Überlegungen unwirtschaftlich sind.

Ein derartiges Verfahren sowie eine Vorrichtung zur Durchführung des Verfahrens beschreibt die EP-A- 0 290 931; sie betrifft ein Verfahren zum Trocknen von Trocknungsabgasen beim Trocknen von Holzspänen, Holzfasern oder dergleichen mittels in einer Brennkammer erzeugte Heißgase, wobei das getrocknete Gut von den Trocknerabgasen getrennt und Filterung eines Teils der Trocknerabgase in einem filternden Abscheider vorgesehen ist, wobei das in ihm abgeschiedene Gut der Brennkammer des Trockners wieder zu geführt und so wirtschaftlich verwertet wird. Eine dem filternden Abscheider nachgeschalteter Kohle-, Kies- oder dergleichen Filtereinheit soll eine Nachreinigung bewirken. Das Verfahren ist so ausgelegt, daß der Taupunkt nicht unterschritten werden darf (auch nicht beim Abreinigen), wobei auf die Kondensation kondensierbarer Dämpfe, insbesondere von verharzenden oder verklebenden Substanzen nicht eingegangen wird. Da verharzende oder verklebende Kondensate jedoch die Abreinigung des filternden Materials stören, kann dieses Verfahren nicht uneingeschränkt eingesetzt werden, weil die zusätzliche, nachgeschaltete Filtereinheit zum Abscheiden von Dämpfen und/oder Aerosolen dem filternden Abscheider nachgeschaltet ist, der somit voll mit den kondensierbaren Anteilen belastet wird. Da, wie aus der Aerosoltechnik bekannt, zwischen Dämpfen und Aerosolen eine Wechselwirkung besteht, wobei bei gegebener Temperatur Aerosolteilchen einen infolge ihres Krümmungsradiusses überhöhten Dampfdruck aufweisen, wodurch kleine Teilchen verschwinden und grössere wachsen, mit der Folge, daß bei Nachabscheidung des Aerosols beispielsweise in einer Kiesschicht das Abgas einen der Temperatur entsprechenden, vollen Dampfdruck aufweist, und somit mit einer dem Dampfdruck entsprechenden Konzentration des im Kies abgeschiedenen verdampfbaren Materials beladen ist, und damit - da diese Dämpfe Träger des Geruchs sind - auch mit einem entsprechenden Geruch. Bei dem Einsatz von Aktivkohle zur Abscheidung der Dampfphase verhält es sich umgekehrt: Die Aktivkohle vermag den Dampf abzuscheiden, nicht jedoch das Aerosol, das wegen des verschwundenen Dampfdruckes nach Austritt aus der Aktivkohle unverzüglich verdampft, wodurch sich eine (wiederum der Temperatur entsprechende) Konzentration der zugeordneten Dämpfe einstellt, die schließlich als Geruchsträger für die Geruchsausbreitung verantwortlich sind.

Hier setzt die Erfindung ein, der die Aufgabe zugrundeliegt, die bekannten Verfahren zur Reinigung der Abluft von Spänetrocknern so weiter zu bilden, daß auch diese kondensierbaren, klebenden und verharzenden, organischen Dämpfe und Gase mit erfaßt werden, ohne die Wirtschaftlichkeit der bekannten Verfahren zu verlassen, ohne die Verwendbarkeit des Grobanteils zu beeinträchtigen und ohne die Nutzbarkeit des Feinanteils im Bereich der Eigenwärme-Versorgung zu beeinträchtigen.

Diese Aufgabe wird nach der Erfindung durch das Kennzeichen des Anspruchs 1 gelöst, vorteilhafte Weiterbildungen und bevorzugte Ausführungsformen beschreiben die abhängigen Ansprüche 2 bis 7; eine zur Durchführung des Verfahrens vorteilhafte Vorrichtung beschreibt das Kennzeichen des Anspruchs 8, Weiterbildungen und bevorzugte Ausführungsformen die abhängigen Ansprüche 9 bis 14.

Die Abscheidung der kondensierbaren organischen Dämpfe und Gase erfolgt in überraschend einfacher Weise durch die dem Abgas aus der Spänetrocknung zugegebenen Adsorptionsmittel auf Kohlenstoffbasis. Die Skala dieser Stoffe reicht von Aktivkohle bis zu Halbkoksen verschiedenen Ursprungs, wobei insbesondere Braunkohlenkoks vorteilhaft eingesetzt werden kann. Seine gegenüber Aktivkohle geringere für die Adsorption verfügbare innere Oberfläche - sie beträgt bezogen auf die üblicher Aktivkohlen etwa ein Viertel - reicht für das vorliegende Adsorptionsproblem durchaus aus und eine möglicherweise nötige Überdosierung wird durch den wesentlich niedrigeren Preis überkompensiert. Die Adsorption verläuft bei den in derartigen Abgasreinigungsanlagen herrschenden Temparaturen von um 130 °C, also weit oberhalb des Wassertaupunktes.

Die zugesetzten Adsorptionsmittel sind mit einem Heizwert verbrennbar, der mindestens dem Heizwert von Holz entspricht; daran ändert auch eine adsorptive Einlagerung der abgeschiedenen organischen Dämpfe und Gase nicht. Da die Zugabe dem als Massenkraftabscheider (Zyklon o.dgl.) ausgebildeten Grobstaubabscheider nachgeschaltet ist, wird die Qualität des in diesem Abscheider zurückgewonnenen und in die Spanplattenproduktion rückführbaren Grobstaubes nicht verschlechtert. Da auch das beladene Adsorptionsmittel mit einem im Vergleich zu Holz entsprechend höheren Heizwert verbrennbar ist, wird auch der Feinstaub, der in der Spanplattenproduktion zu Heizzwecken einer Verbrennung zugeführt wird, in seiner für den Wärmehaushalt wichtigen Qualität nicht gemindert. Die Abscheidung ist dabei so wirkungsvoll, daß das Auftreten von als "blaue Nebel" in der freien Atmosphäre anfallenden Kondensat-Aerosole unterdrückt wird.

Nach bislang vorliegenden Erfahrungen kann die Dosierung des Adsorptionsmittels so gewählt werden, daß sich eine Konzentration oberhalb etwa 1 - 2 g/m³ ergibt. Die notwendigen Konzentrationen der zugegebenen Adsorptionsmittel werden dabei von der Konzentration der zu adsorbierenden Dämpfe und Gase und dem Aktivierungsgrad des Adsorptionsmittels bestimmt, sie können u.U. wesentlich höher, beispielsweise oberhalb etwa 8 g/m³ liegen. So zeigt sich in überraschend einfacher Weise die Lösung eines mit der Spänetrocknung verbundenen Problems, das in einer Belästigung der Nachbarschaft in der Umgebung des Spänetrockners zum einen durch Geruchseinwirkung und zum anderen durch Aerosolniederschlag besteht.

Bei der Trocknung sollen an sich Überteniperaturen vermieden werden, treten aber dennoch von Zeit zu Zeit auf. Dabei wird unter erhöhter Temperatur Holz zumindest teilweise quasi trocken destilliert, wobei saure Produkte (etwa Holzessig) anfallen. Darüber hinaus enthalten viele bei der Beheizung der Spänetrockner eingesetzten Brennstoffe Schwefel, der in der Verbrennung oxidiert wird und so auch saure Bestandteile in das Abgas abgibt. Um einer schädlichen Säureeinwirkung vorzubeugen, wobei zu beachten ist, daß die Betriebstemperaturen wegen in den filternden Abscheidern eingesetzten Medien unter zu erwartenden Säuretaupunkten gehalten werden, wird den Adsorptionsmitteln ein säureneutralisierendes Additiv wie z.B. Kalk zugegeben.

Da der Heizwert der abgeschiedenen Adsorptionsmittel auch nach ihrer Beladung mindestens dem Heizwert von Holz entspricht, kann der im filternden Abscheider abgeschiedene und aus ihm abgezogene Feinstaub zusammen mit den ebenfalls abgeschiedenen, mit den adsorbierten organischen Dämpfen beladenen Adsorptionsmitteln ohne weiteres einer Verbrennung zugeführt werden, so daß Entsorgungsprobleme entfallen. Dabei wird, wenn das Adsorptionsmittel bei einem Durchgang noch nicht erschöpft ist, ein Teil des Adsorptionsmittels im Kreislauf gefahren und eine das Adsorptionsvermögen aufrecht erhaltender Anteil frischen Adsorptionsmittels ständig zugegeben; dessen Menge richtet sich danach, welcher Beladungsgrad bezogen auf den, der bei gegebener Temperatur mit dem Stoffgemisch erreichbar ist, bei einem Umlauf erreicht wird. Liegt die erreichbare Grenzbeladung z.B. bei 24 Gew.% und wird bei einem Umlauf lediglich eine Beladung von 8 Gew% erreicht, ist es ausreichend, wenn ein Drittel des umlaufenden Adsorptionsmittels ausgeschleust, durch frisches ersetzt und das so entstandene Gemisch im Kreislauf gefahren wird.

Die Zugabe der Adsorptionsmittel erfolgt in der vom Massenkraftabscheider abgehenden Rohrleitung, die bei den für derartige Anlagen üblichen Konzeptionen unter Unterdruck steht. Dadurch kann in einfacher Weise z.B. über eine Dosierschnecke Adsorptionmittel in die Leitung eingespeist werden. Da in den Rohrleitungen zur Vermeidung von Staubablagerungen (relativ) hohe Geschwindigkeiten herrschen, sorgen die dabei auftretenden Querturbulenzen für eine gute Verteilung des pulverförmigen Adsorptionsmittels in der strömenden Abluft und für eine ständige Umlagerung. Dies gilt auch für in die Rohrleitung eingeschaltete Umlenkungen, wie z.B. vorgesehene Explosionstöpfe, bei denen die ankommende Rohrleitung nach oben geöffnet von dem Topf überfangen ist, dessen oberes Ende mit einem lose aufgelegten Deckel (der bei einer Explosion zur Druckentlastung angehoben wird) verschlossen ist, und bei dem die abgehende Leitung an das untere Ende des Topfes angeschlossen ist. Im Normalbetrieb bilden diese Explosionstöpfe Umlenkstellen, die zur weiteren Durchmischung beitragen.

Bedeutsam für die einsetzbare Körnung des Adsorptionsmittels ist eine darauf abgestellte Strömungsgeschwindigkeit der Abluft in der Rohrleitung: Die Körnung muß hinreichend fein sein, um bei der gegebenen Strömungsgeschwindigkeit ein Ausfallen der groben Anteile der Adsorptionsmittel zu verhindern. In vertikal verlaufenden Leitungen bewirkt der Unterschied zwischen der Geschwindigkeit des Abgases und der Sinkgeschwindigkeit der groben Teilchen des Adsoptionsmittel (Stokes'sche Geschwindigkeit) eine Erhöhung der Kontaktzeit.

Üblicherweise werden filternde Abscheider mit Schläuchen oder Taschen eingesetzt, die zum Begrenzen der an ihnen auftretenden Druckdifferenz mechanisch durch Rütteln oder Klopfen oder pneumatisch durch Rückspülen oder durch Druckluftimpulse abgereinigt werden. Für die Reinigung der Abgase von Spänetrocknern haben sich Schlauchfilter mit Druckluft-Impuls-Abreinigung bewährt, wobei die Druckluftimpulse den Abreinigungsbedingungen entsprechend einstellbar sind. Um die Druckdifferenz des filternden Abscheiders im gewünschten Bereich und somit auch den Förderstrom des Ventilators möglichst konstant zu halten, werden die Druckluftimpulse nach Impulsabstand und Impulsdauer so gesteuert, das bei ansteigender Druckdifferenz am Abscheider die Abreinigungsintensität erhöht, bei fallender Druckdifferenz dagegen erniedrigt wird, wobei neben Impulsabstand und -dauer auch der Vordruck die Reinigungsintensität mitbestimmt. Durch die Einstellung der Reinigungsintensität wird erreicht, daß das filternde Material unmittelbar nach der Abreinigung sofort wieder einen "Filterkuchen" erhält und so immer in einem für eine gute Abscheidung notwendigen Betriebszustand verbleibt. Da dieser unmittelbar nach der Abreinigung wieder gebildete Filterkuchen auch noch Adsorptionsmittel enthält, ist auch eine Adsorption - soweit sie noch nicht während des Verweilens der Adsorptionsmittel in der Strömung erfolgt ist- möglich. Auch das bei einem Absinken der Temperatur unter den Kondensationspunkt der organischen Dämpfe mögliche Verkleben des filternden Materials wird durch die Erhaltung eines hinreichenden Filterkuchens vorgebeugt: Möglicherweise anfallende Kondensate werden von dem Filterkuchen quasi aufgesaugt.

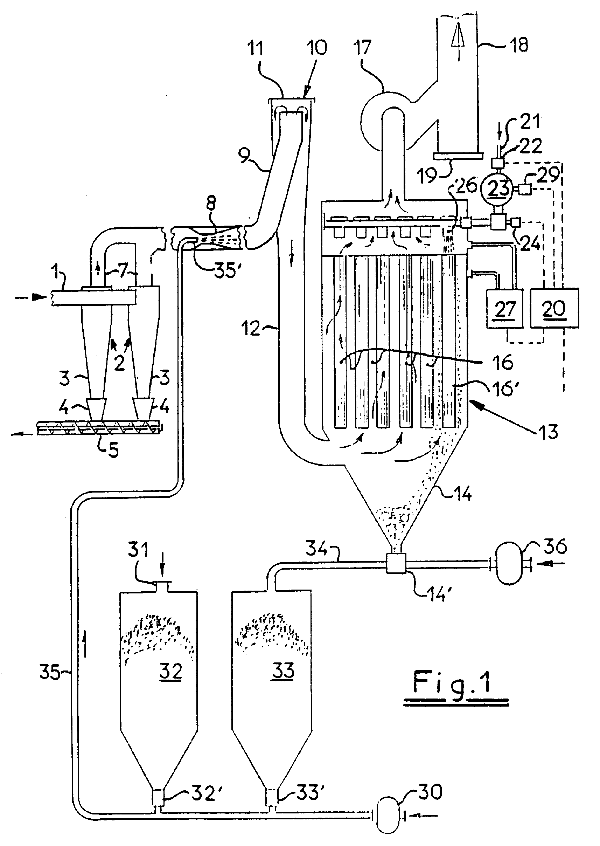

Das Wesen der Erfindung wird anhand des in der Figur 1 als Ausführungsbeispiel beigefügten Verfahrensschema näher erläutert:

Durch die (abgebrochen) dargestellte Leitung 1 strömt die Abluft des (nicht näher dargestellten) Spänetrockners dem als Zyklon 2 dargestellten Massenkraftabscheider zu, in dem der Grobanteil des aus den Trockner ausgetragenen Feingutes abgeschieden wird.

Dieser abgeschiedene Grobanteil wird im Staubbunker 3 des Zyklons gesammelt und über dessen Staubaustrag 4 und die Schnecke 5 der weiteren Verwendung ggf. zusammen mit den getrockneten Spänen zugeführt. Das so vorgereinigte Trocknerabgas gelangt über die an das Zyklon-Tauchrohr 6 angeschlossene Rohrleitung 7 zu der als Venturi-Rohr 8 dargestellte Zugabestelle für das Adsorptionsmittel. Das in der Kehle des Venturi's zugegebene Adsorptionsmittel verteilt sich aufgrund der Querturbulenzen im Trocknerabgas und strömt mit diesem durch die Steigleitung 9 zum einem in die Leitung eingefügten Explosionstopf 10, in dem die Steigleitung 9 in kurzem Abstand vor dem öffenbaren Explosionsdeckel 11 so endet, daß das strömende Gas um etwa 180° umgelenkt wird. In dieser Steigleitung herrscht eine Strömungsgeschwindigkeit, die einen sicheren Transport auch des Adsorptionsmittels sicherstellt. Dabei wird diese vorteilhafterweise so auf die Sinkgeschwindigkeit der groben Partikel des Adsorptionsmittels abgestimmt , daß für diese Partikel, deren Beladung zeitlich verzögert erfolgt, eine vergrößerte Verweilzeit durch Überlagerung der aufwärts gerichteten Strömungsgeschwinigkeit und ihrer nach unten gerichteten Sinkgeschwindigkeit (Stokes' sche Geschwindigkeit) eintritt. Die angeschlossene Falleitung 12 führt das Trocknerabgas dem als Schlauchfilter 13 dargestellten filternden Abscheider zu, wobei sie in dessen Staubbunker 14 mündet. Das durch den Staubbunker 14 einströmende Gas durchsetzt die im Filtergehäuse 15 aufgehängten Filterschläuche 16 von außen nach innen, wobei der mitgeführte Feinanteil des aus dem Trockner ausgetragenen Feingutes zusammen mit dem zugegebenen Adsorptionsmittel auf der Außenseite der Filterschläuche zurück gehalten wird. Das gereinigte Abgas wird von dem Ventilator 17 gefördert und über die mit einer Reinigungsklappe 19 verschlossene Ausblasleitung 18 in die Atmosphäre entlassen.

Der auf der Außenseite der Filterschläuche 16 zusammen mit dem zugegebenen Adsorptionmittel zurückgehaltene Feinanteil des ausgetragenen Feingutes bildet den Filterkuchen, der von Zeit zu Zeit abgereinigt werden muß. In der Darstellung ist der Filterschlauch 16' in der Abreinigungsphase dargestellt. Vom einem Steuergerät 20 wird aus einem Druckluftspeicher 23 über ein Magnetventil 24 ein Druckluftimpuls in die Druckluftleitung 25 gegeben, wobei diese mit in über den Schläuchen angeordneten Abreinigungsinjektoren 26 vorgesehenen Abreinigungsdüsen verbunden sind. Die aus den Abreinigungsdüsen austretende Spülluft dringt als Spülluftstrahl in das Innere des abzureinigenden Schlauches 16', durchsetzt dessen Wandung und läßt den Filterkuchen aufbrechen und abfallen. Da für einen ordnungsgemäßen Filterbetrieb ein gewisser Filterkuchen vorteilhaft ist, wird der zeitliche Abstand der Abreinigungsimpulse von dem Steuergerät 20 gesteuert, wobei das Steuergerät 20 die am filternden Abscheider mit den Meßanschlüssen 28 gemessene und über den Druckdifferenzgeber 27 übermittelte Druckdifferenz zugrundegelegt wird. Darüber hinaus wird auch der Vordruck über den Druckgeber 29 berücksichtigt; so kann der für einen ordnungsgemäßen Filterbetrieb besonders bei Anwesenheit organischer, kondensierbarer Dämpfe und Gase wichtige Rest-Filterkuchen auch bei Abreinigung gehalten werden.

Das zuzugebende Adsorptionsmittel wird in einem Vorratsbunker 32 vorrätig gehalten, in den es durch die Speiseleitung 31 gelangt. In der geforderten Dosierung wird das Adsorptionsmittel über ein steuerbares Austragsorgan 32' in eine pneumatische Förderleitung 35 eingeschleust, die, von dem Fördergebläse 30 versorgt, das Adsorptionsmittel zur Zugabestelle gelangen läßt. Die Mündung 35' der pneumatischen Förderleitung 35 liegt in dem Venturi-Rohr 8, das hier die Zugabestelle bildet. Das aus der Mündung 35' austretende Adsorptionsmittel verteilt sich im Gesamtluftstrom wegen der herrschenden Querturbulenzen gleichmäßig.

Der gegenüber dem Abluftstrom des Spänetrockners kleine Förderluftstrom der pneumatischen Förderung erhöht den Gesamtluftstrom allenfalls unwesentlich, er kann vernachlässigt werden. Mit dem Luftstrom strömt das Adsorptionsmittel durch die Steigleitung 9, den Explosionstopf 10 und die Falleitung 12 und wird im filternden Abscheider abgeschieden.

Der in dem filternden Abscheider zusammen mit dem zugegebenen Adsorptionsmittel abgeschiedene Feinanteil des aus dem Trockner ausgetragenen Staubes wird bei der Abreinigung zum Abfallen gebracht, sammelt sich im Staubbunker 14 und wird über das Austragsorgan 14' (z.B. eine rotierende Kammerschleuse) ausgetragen. Das im filternden Abscheider zusammen mit dem Feinanteil des aus dem Trockner ausgetragenenen Feingutes ist in der Praxis nicht bis zur Sättigungsgrenze beladen, daher wird ein Teil davon zurückgeführt. Dazu gelangt dieser Teil in einen Vorratsbunker 33, wobei die Förderung über die Förderleitung 34 von einem Gebläse 36 übernommen wird, während der andere Teil des Austrages (in nicht näher dargestellter Weise) einer Entsorgung oder einer Verwertung zugeführt wird. Der zurückgeführte Anteil wird aus dem Vorratsbunker 33 über ein Austragsorgan 33' in die pneumatische Förderleitung 35 eingeschleust und von dem Fördergebläse 30 zusammen zur mit dem in diese eingeschleusten Adsorptionsmittel zur Zugabestelle gefördert. Dabei kann diese Zurückführung des Anteils des abgeschiedenen Feinanteils aus dem Staubbunker 14 des filternden Abscheiders 13 in den Vorratsbunker 33 auch ohne eine zusätzliche pneumatische Förderung mit einem Hilfsgebläse 36 und seine Dosierung über seine Zumischung zum frischen Adsorptionsmittel und dessen Dosierung erfolgen.

Für die Erprobung wurde eine Testeinheit an eine vorhandene Reinigungsanlage für die Abluft aus einem Spänetrockner dem dort vorhandenen Zyklon nachgeschaltet angeschlossen. Dem im Zyklon vorgereinigten Abgas wurde Braunkohlenkoks in einer Körnung 0/0.4 mm zugegeben. Das Gemisch wurde dem nachgeschalteten Versuchs-Schlauchfilter zugeführt und in diesem von Staub (einschließlich Adsorptionsmittel) befreit.

```
Das Schlauchfilter hatte ein Filterfläche von    2,25 m2,
die spez. Flächenbelastung lag bei               80    m3/hm2.
Rohgastemperatur:                                130   °C
Abreinigung:                Druckluft-Impulse
Adsorptionsmittel-Zugabe: In Rohrleitung, 10m vor Filtereintritt
Geschwindigkeit in der Rohrleitung:              ca. 20  m/s.
```

Vor und hinter der Adsorptionsmittel-Zugabestelle genommene Gasproben wurden mit einem Flammen-Ionisations-Detektor (FID) auf den Gehalt an organischem Kohlenstoff untersucht, wobei auf Gesamt-Kohlenwasserstoff (CnHm) abgestellt wurde. Im einzelnen wurden die in der Tabelle 1 aufgelisteten, aus vorliegenden Versuchsergebnisse ausgewählte Werte erzielt. Wie diese Versuche zeigen lassen sich die organischen Dämpfe hinreichend gut abscheiden, der Abscheidegrad lag im Bereich von etwa 85 %. In keinem Fall wurde das Auftreten von "blauem Rauch" beobachtet. Die Geruchsminderung am Ausblas der Versuchseinheit war signifikant. Wird die in der Praxis auftretende Verdünnung zwischen Emissionsort und Immissionsstelle berücksichtigt, kann von Geruchslosigkeit gesprochen werden. Dabei waren Braunkohlenkoks und Aktivkohle lediglich graduell unterschiedlich, im Hinblick auf die Wirtschaftlichkeit bietet sich daher der preiswertere Braunkohlenkoks an (was eine Verwendung von Aktivkohle in besonders kritischen Fällen nicht ausschließt).

Tabelle 1: Abscheideversuche an Trocknerabluft

| Versuch Nr. | Zu gabe | Konzen tration $g/m^3$ | Gesamt CWS $(C_nH_m)$ vor Aufg. ppM | Gesamt CWS $(C_nH_m)$ nach Aufg. ppM | Abschei- durchgrad % |
|---|---|---|---|---|---|
| 1 | keine | o | 97 | 95 | <2 |
| 4 | BKK | 10,8 | 80 | 18 | 77,5 |
| 7 | BKK | 19 | 74 | 11 | 85,1 |
| 8 | BKK | 20,6 | 80 | 18 | 77,5 |
| 10 | BKK | 23,4 | 74 | 12 | 83,7 |
| 12 | BKK | 35,4 | 79 | 14 | 82,3 |
| 13 | BKK | 48 | 87 | 25 | 71,3 |
| 15 | AVK | 27,1 | 87 | 16 | 81,6 |
| 16 | AVK | 38,1 | 87 | 15 | 82.8 |

BKK: Braunkohlenkoksstaub 0/0,4

AVK: Aktivkohlestaub 0/0,4

Die Konzentrationen des organischen Gesamtkohlenstoffs wurden jeweils über mindestens 30 Minuten gemessen und der angegebene Mittelwert über die Meßzeit gebildet.

## Patentansprüche

1. Verfahren zur Abscheidung klebender oder verharzender, kondensierbarer organischer Dämpfe oder Gase aus der Abluft von Spänetrocknern, aus der Späne und Grobstaub mittels eines Massenkraftabscheiders und Feinstaub mittels eines filternden Abscheiders entfernt werden, **dadurch gekennzeichnet,** daß der Abluft des Spänetrockners zwischen dem Massenkraftabscheider und dem filternden Abscheider ein pulvriges Adsorptionsmittel zugesetzt wird, das in dem nachgeschalteten filternden Abscheider zusammen mit dem noch vorhandenen Reststaub abgeschieden wird, wobei das Adsorptionsmittel auf Kohlenstoff-Basis aufgebaut, vorzugsweise ein Braunkohlenkoksadsorbens ist.

2. Verfahren nach Anspruch 2, **dadurch gekennzeichnet,** daß dem Adsorptionsmittel weitere chemosorptiv wirkenden Additive, vorzugsweise Kalk, zugesetzt sind.

3. Verfahren nach Anspruch 1 oder 2, **dadurch gekennzeichnet,** daß der Adsorptionsmittelzusatz, bezogen auf den Volumenstrom der Abluft des Spänetrockners derart ist, daß eine Adsorptionsmittel-Konzentration von mindestens 1 g/m$^3$ in der Abluft erreicht wird.

4. Verfahren nach Anspruch 3, **dadurch gekennzeichnet,** daß die Adsorptionsmittelkonzentration mindestens 2 g/m$^3$ beträgt, vorzugweise mindestens 8 g/m$^3$.

5. Verfahren nach einem der Ansprüche 1 bis 4, **dadurch gekennzeichnet,** daß der vom Massenkraftabscheider und von filternden Abscheider ausgebrachte Staub einschließlich des zugesetzten Adsorptionsmittels in einer Heizungsanlage verbrannt wird.

6. Verfahren nach einem der Ansprüche 1 bis 5, **dadurch gekennzeichnet,** daß das Adsorptionsmittel im Kreislauf gefahren wird, wobei zum Aufrechterhalten der Adsorptionsfähigkeit ein Teil des verbrauchten Adsorptionsmittels ausgeschleust und durch frisches Adsorptionsmittel ersetzt wird.

7. Verfahren nach einem der Ansprüche 1 bis 6, **dadurch gekennzeichnet,** daß die Abreinigung des filternden Abscheiders mittels Druckluftimpulse erfolgt, wobei Dauer, Intervall und Vordruck der Impulse so eingestellt werden, daß eine zur Erhaltung der gewünschten Druckdifferenz erforderliche Grundbeladung des filternden Materials erhalten bleibt, wobei ein Teil des ab geschiedenen und bei der Abreinigung vom Filtermedium abgelösten Staubes erneut als Filterkuchen auf das Filtermedium zurückgeführt wird.

8. Vorrichtung zur Durchführung des Verfahrens nach einem der Ansprüche 1 bis 7 mit einem mit einem Spänetrockner über eine Abgasleitung (1) verbundenen Massenkraftabscheider (2), dem über eine angeschlossene Rohrleitung (7) ein filternder Abscheider (13) nachgeschaltet ist, **dadurch gekennzeichnet,** daß dem Massenkraftabscheider (2) nach- und dem filternden Abscheider (13) vorgeschaltet in der beide verbindenden Rohrleitung (7) eine Zugabestelle für das Adsorptionsmittel angeordnet ist, der eine Mischstrecke (9, 10, 12) nachgeschaltet ist, wobei die Länge der Mischstrecke (9, 10, 12) derart ist, daß die Verweilzeit der Trocknerabluft in ihr bei mindestens einer Sekunde liegt.

9. Vorrichtung nach Anspruch 8, **dadurch gekennzeichnet,** daß als Zugabestelle eine Schleuse mit einer Dosierschnecke mit Einmischung des Adsorpticnsmittels in die Strömung der Rohrleitung (7) vorgesehen ist.

10. Vorrichtung nach Anspruch 8, **dadurch gekennzeichnet,** daß als Zugabestelle eine mit einem pneumatischen Sender (30, 32', 35) für das Adsorptionsmittel verbundene Blassonde (35') mit Einmischung des Adsorptionsmittels in die Strömung in der Rohrleitung (7) vorgesehen ist.

11. Vorrichtung nach Anspruch 9 oder 10, **dadurch gekennzeichnet,** daß die Rohrleitung (7) im Bereich der Zugabestelle als Venturi-Rohr (8) ausgebildet ist und die Adsorptionsmittel-Zugabe in Bereich höchster Strömungsgeschwindigkeit in dessen Kehle vorgesehen ist.

12. Vorrichtung nach Anspruch 10 oder 11, **dadurch gekennzeichnet,** daß die der Blassonde (35') vorgeschaltete pneumatische Sendestation (30, 32', 35) für das Adsorptionsmittel mit einem Vorratsbunker (32) für frisches Adsorptionsmittel vorzugsweise über eine Dosierschleuse (32') verbunden ist.

13. Vorrichtung nach Anspruch 12 , **dadurch gekennzeichnet,** daß die der Blassonde (35') vorgeschaltete Sendestation (30, 32', 35) zusätzlich vorzugsweise über einen Zwischenbunker (33) für im Kreislauf gefahrenes, aus dem Staubbunker (14) des filternden Abscheider (13) abgezogenen Feinstaub mit diesem über eine Dosierschleuse (33') verbunden ist.

14. Vorrichtung nach Anspruch 12 oder 13, **dadurch gekennzeichnet,** daß die Dosiersschleuse (32') des Vorratsbunkers (32) für das frische Adsorptionsmittel und die Dosierschleuse (33') des Zwischenbunkers (33) Antriebe aufweisen, die mit Steuerungen versehen sind, zur Einstellung unterschiedlicher Drehzahlen und/oder Ein- und Ausschaltzeiten.

**Claims**

1. Method of separating sticky or gummy condensible organic vapours or gases from the exhaust air of chip driers, from which chips and coarse dust particles are removed by means of an inertia force separator and fine dust particles by means of a filtration separator, characterized in that a powdery adsorbent is added to the exhaust air of the chip drier between the inertia force separator and the filtration separator, which will be separated off in the downstream filtration separator together with the remaining dust still present, the adsorbent being a carbon-based adsorbent, preferably a brown coal adsorbent.

2. Method as claimed in Claim 2, characterized in that further chemosorptive additives, preferably lime, are added to the adsorbent.

3. Method as claimed in Claim 1 or 2, characterized in that the amount of adsorbent added is such in relation to the volume stream of the exhaust air of the chip drier that an adsorbent concentration of at least 1 $g/m^3$ is achieved in the exhaust air.

4. Method as claimed in Claim 3, characterized in that the adsorbent concentration is at least 2 $g/m^3$, preferably at least 8 $g/m^3$.

5. Method as claimed in any one of Claims 1 to 4, characterized in that the dust separated off by the inertia force separator and by the filtration separator is incinerated together with the added adsorbent in a heating plant.

6. Method as claimed in any one of Claims 1 to 5, characterized in that the adorbent is recirculated, whilst part of the adsorbent used is taken out and replaced by fresh adsorbent, in order to maintain the adsorption capacity.

7. Method as claimed in any one of Claims 1 to 6, characterized in that the filtration separator is cleaned by means of compressed air pulses, the duration, intervals and pressure of which are adjusted so that a basic load of the filtration material is maintained, which is necessary for maintaining the desired pressure differential, with part of the dust separated off and freed from the filter medium during the cleaning process being returned to the filter medium as filter cake.

8. Apparatus for carrying out the method as claimed in any one of Claims 1 to 7, comprising an inertia force separator (2) connected via an exhaust line (1) to a chip drier, the inertia force separator (2) having connected thereto in a downstream direction a filtration separator (12), characterized in that downstream from the inertia force separator (2) and upstream from the filtration separator (13) a means for adding the adsorbent is mounted in the pipe (7) connecting the two, said means being followed by a mixing section (9, 10, 12), the length of which is such that the dwelling time of the drier exhaust air therein is at least one second.

9. Apparatus as claimed in Claim 8, characterized in that a sluice having a metering worm therein for admixing the adsorbent into the stream of the pipe (7) is provided as adding means.

10. Apparatus as claimed in Claim 3, characterized in that a blow probe (35') for admixing the adsorbent into the stream in the pipe (7) is provided as adding means, the blow probe (35') being connected with pneumatic transfer means (30, 32', 35') for the adsorbent.

11. Apparatus as claimed in Claim 9 or 10, characterized in that in the area of the adding means, the pipe (7) is formed as a venturi pipe (8), and that the adsorbent is added into the area of maximum flow speed in the throat thereof.

12. Apparatus as claimed in Claim 10 or 11, characterized in that the upstream pneumatic transfer station (30, 32', 35') for the adsorbent is connected with a storage bunker (32) for fresh adsorbent, preferably via a metering sluice (32').

13. Apparatus as claimed in Claim 12, characterized in that the transfer station (30, 32', 35') upstream from the blow probe (35') is additionally connected via a metering sluice (33') with the dust bunker (14) of the filtration separator (13) for recirculated fine dust extracted from the dust bunker (14) of the filtration separator (13), the connection being preferably via an intermediate bunker (33).

14. Apparatus as claimed in Claim 12 or 13, characterized in that the metering sluice (32') of the storage bunker (32) for fresh adsorbent and the metering sluice (33') of the intermediate bunker (33) have drives provided with controls for adjusting various rotation speeds and/or starting and stopping times.

## Revendications

1. Procédé de séparation des vapeurs ou des gaz organiques condensables collants ou gluants, sortant d'un séchoir à copeaux à partir duquel les copeaux et la poussière grossière sont retirés au moyen d'un séparateur par gravitation, la poussière fine étant retirée au moyen d'un séparateur par filtration, caractérisé en ce qu'on ajoute à l'air sortant du séchoir à copeaux, entre le séparateur par gravitation et le séparateur par filtration, un agent d'adsorption en poudre, lequel est éliminé ensuite dans le séparateur par filtration, en même temps que la poussière fine encore présente, l'agent d'adsorption qui est à base de carbone étant de préférence un absorbant au coke de lignite.

2. Procédé selon la revendication 1, caractérisé en ce qu'on ajoute encore à l'agent d'adsorption d'autres additifs à effet chimique, de préférence de la chaux.

3. Procédé selon la revendication 1 ou la revendication 2, caractérisé en ce que l'additif d'adsorption, rapporté au flux du volume d'air sortant du séchoir à copeaux, se trouve en quantité telle qu'on atteint une concentration en agent d'adsorption d'au moins 1 g/m$^3$ d'air sortant.

4. Procédé selon la revendication 3, caractérisé en ce que la concentration en agent d'adsorption est d'au moins 2 g/m$^3$, de préférence au moins 8 g/m$^3$.

5. Procédé selon l'une quelconque des revendications 1 à 4, caractérisé en ce que la poussière retirée du séparateur par gravitation et du séparateur par filtration, y compris l'agent d'adsorption ajouté, est brûlée dans une installation de chauffage.

6. Procédé selon l'une quelconque des revendications 1 à 5, caractérisé en ce que l'agent d'adsorption est utilisé en circuit fermé, une partie de l'additif d'adsorption utilisé étant remplacée par de l'agent d'adsorption frais afin de maintenir sa faculté d'adsorption toujours au même niveau.

7. Procédé selon l'une des revendications 1 à 6, caractérisé en ce que le séparateur par filtration est nettoyé par des jets d'air comprimé dont la durée, la périodicité et la pression en amont sont choisies de telle sorte que l'on conserve la charge de base en matériau filtrant nécessaire pour maintenir la différence de pression voulue, une partie de la poussière retirée, ou récupérée lors du nettoyage du filtre, étant réintroduite ensuite et réutilisée comme couche de filtrage par dessus l'agent filtrant.

8. Appareil permettant la mise en oeuvre du procédé selon l'une des revendications 1 à 7, comprenant un séparateur par gravitation (2) relié à un séchoir à copeaux par un conduit d'air sortant (1), et en aval duquel est branché par une canalisation (7) un séparateur par filtration (13), caractérisé en ce qu'un dispositif d'introduction de l'additif est disposé en aval du séparateur par gravitation (2) et en amont du séparateur par filtration (13), sur la canalisation (7) les reliant l'un à l'autre, dispositif en aval duquel se trouve une zone de mélange (9, 10, 12), la longueur de cette zone de mélange (9, 10, 12) étant telle que le temps de séjour, dans cette zone, de l'air sortant du séchoir est d'au moins une seconde.

9. Appareil selon la revendication 8, caractérisé en ce que le dispositif d'introduction de l'additif consiste en une vanne avec une vis de dosage sans fin permettant de mélanger l'agent d'adsorption au courant d'air traversant la canalisation (7).

10. Appareil selon la revendication 8, caractérisé en ce que le dispositif d'introduction de l'additif consiste en une sonde d'injection (35') reliée à une alimentation pneumatique de l'agent d'adsorption (30, 32', 35), permettant de mélanger l'agent d'adsorption au courant d'air traversant la canalisation (7).

11. Appareil selon la revendication 9 ou la revendication 10, caractérisé en ce que la canalisation (7) forme un Venturi (8) au niveau du dispositif d'introduction de l'additif et en ce que l'introduction de l'agent d'adsorption se fait au niveau de son col, dans la zone de vitesse d'écoulement maximale.

**12.** Appareil selon la revendication 10 ou la revendication 11, caractérisé en ce que la station pneumatique d'alimentation en agent d'adsorption (30, 32', 35) située avant la sonde d'injection (35') est reliée, de préférence par l'intermédiaire d'une vanne de dosage (32'), à un silo de stockage (32) d'agent d'adsorption frais.

**13.** Appareil selon la revendication 12, caractérisé en ce que la station pneumatique (30, 32', 35) située avant la sonde d'injection (35') est de plus reliée, de préférence par l'intermédiaire d'un silo intermédiaire (33) et d'une vanne de dosage (33'), au silo à poussiéres (14) du séparateur par filtration (13), pour permettre la réutilisation en circuit-fermé de la poussière fine délivrée par celui-ci.

**14.** Appareil selon la revendication 12 ou la revendication 13, caractérisé en ce que la vanne de dosage (32') du silo de stockage (32) de l'agent d'adsorption frais et la vanne de dosage (33') du silo intermédiaire (33) possèdent des moteurs d'entraînement pilotés par des commandes permettant de choisir des vitesses de rotation et/ou des périodes de marche/arrêt variables.

Fig.1